# EUROPÄISCHE PATENTSCHRIFT

(11) **EP 2 088 040 B1**
(45) Veröffentlichungstag und Bekanntmachung des Hinweises auf die Patenterteilung: **18.08.2010**
(21) Anmeldenummer: 09000794.9
(22) Anmeldetag: 21.01.2009
(51) Int. Cl.: B60R 25/00, G07C 9/00

(54) **Vorrichtung zum Aktivieren und Deaktivieren einer Zugangskontrolleinrichtung**
Device for activating and deactivating an access control device
Dispositif d'activation et de désactivation d'un dispositif de contrôle d'accès

(30) Priorität: 07.02.2008 DE 102008008307
(43) Veröffentlichungstag der Anmeldung: 12.08.2009
(73) Patentinhaber: DB Rent GmbH, 60327 Frankfurt/Main (DE)
(72) Erfinder: Reth, Philipp, 10405 Berlin (DE); Köhler, Henning, 80337 München (DE)
(74) Vertreter: Zinken-Sommer, Rainer

(56) Entgegenhaltungen:
- EP-A- 1 018 692
- WO-A-98/34818
- WO-A-02/051676
- DE-A1- 10 137 579
- US-A1- 2006 219 776
- ORTIZ S: "Is near-field communication close to success?" COMPUTER, IEEE SERVICE CENTER, LOS ALAMITOS, CA, US, Bd. 39, Nr. 3, 31. März 2006 (2006-03-31), Seiten 18-20, XP002450063 ISSN: 0018-9162

## Beschreibung

Die Erfindung betrifft eine Vorrichtung zum Aktivieren und Deaktivieren einer Zugangskontrolleinrichtung, welche zum Empfang eines von einem mobilen Kommunikationsendgerät ausgesendeten elektronischen Öffnungs- und Verriegelungscodes über eine Nah- oder Kurzstreckenfunkschnittstelle ausgelegt ist, wie sie gemäß dem Oberbegriff aus der WO 02/051676A1 bekannt ist.

Der zutrittskontrollierte Bezug von Dienstleistungen wird in zunehmendem Maße unter Nutzung elektronischer Medien abgewickelt. Erlaubnisscheine in Form von auf einem Papierträger gedruckten Eintrittskarten, Fahrkarten etc... werden immer häufiger von elektronischen Tickets abgelöst. Bei der technischen Realisierung derartiger e-Ticketing-Anwendungen wird üblicherweise zwischen Systemen zur Erfassung der Anwesenheit von Dienste-Nutzern in einem kostenpflichtigen Gebiet - sogenannte "Be In - Be Out - Systeme" (BiBo) - sowie Systemen zur Erfassung des Ein- und Austritts von Dienste-Nutzern in bzw. aus einem kostenpflichtigen Gebiet - sogenannte "Check In - Check Out - Systeme" (CiCo) - unterschieden.

Die Vorteile auf Seiten der leistungserbringenden Dienstleistungs-Unternehmen sind in erster Linie im Reduzieren des Aufwandes für Produktion und Logistik (Bevorratung, Verteilung etc.) der Papier-Tickets sowie des Aufwandes für das Handling von Bargeld zu sehen. Daneben wird angestrebt, die von den Kunden nachgefragten Dienstleistungen mit weniger Aufwand und größerer Exaktheit als bisher erfassen zu können. Dies soll nicht nur einer verbesserten kommerziellen Bewertung der angebotenen Dienstleistungen sondern auch einer Verbesserung bei der Prognose des künftigen Nachfragepotentials auf Basis der mit höherer Exaktheit erfassten aktuellen Nachfrage dienen. Auf Seiten der Kunden wird ein Mehrwert darin gesehen, dass ein elektronisches Ticketing für viele nutzungsabhängig zu bepreisende Dienstleistungen eine verbesserte Möglichkeit zur "Best-Preis-Abrechnung" bietet. Ein Beispiel hierfür ist im kommerziellen Verleih von Verkehrsmitteln zu sehen, dessen Bepreisung nicht nur von der Nutzungsdauer (z.B.: Langzeitmiete ist billiger als Kurzzeitmiete), sondern auch vom Nutzungszeitpunkt (z.B.: verbilligte Tarife in nachfrageschwachen Zeiten) und der Nutzungs-Intensität (z.B.: wer mit einem entliehenen Verkehrsmittel innerhalb eines definierten Entleih-Zeitraums viel fährt zahlt mehr als ein "Wenigfahrer"). Insbesondere sporadischen Nutzern einer Dienstleistung kommt dies entgegen, da diese sich nicht mit den Tarifierungs-Regularien auseinandersetzen müssen und ohne ein solches psychologisches Zugangs-Hemmnis die Dienstleistung nutzen können.

In der Praxis tendiert man derzeit eher zu CiCo- als zu BiBo-Systemen. Dies ist zum einen darin begründet, dass die Vorgänge des aktiven Ein- und Aus-Checkens vielen potentiellen Nutzern einer Dienstleistung hinreichend geläufig und logisch plausibel sind. Zum anderen ist dies aber auch darin begründet, dass die bei BiBo-Systemen erforderliche räumliche Erfassung insbesondere bei großräumigen (d.h. in der Fläche verteilten) und nachfrageintensiven Anwendungen nach wie vor an technische Grenzen stößt.

Der Stand der Technik bei elektronischen Zugangsmitteln sieht häufig den Einsatz von Smartcards vor, welche in personalisierter Form (mit nachgelagerter Abrechnung) oder anonymer Form (mit Vorausbezahlung von Wertguthaben) den Nutzern einer Dienstleistung zugeordnet sind. Die Nutzer melden sich mittels dieser Smartcards sowohl beim Starten als auch beim Beenden einer kostenpflichtigen Dienstleistung an bzw. ab. Hierfür sind spezielle Erfassungsgeräte vorgesehen (sog. "Smartcard-Reader"), welche entweder in Form von Sperren-Anlagen oder als einfache Erfassungsgeräte (z.B. im Bereich der Zu- bzw. Abgangstüren eines Verkehrsmittels) angeordnet sind.

Des weiteren ist es aus dem Stand der Technik bekannt, die Smartcards nicht mehr länger als eigenständiges Trägermedium einzusetzen, sondern deren Funktionalität auf eine ohnehin allseits verfügbare Endgeräte-Plattform zu überführen: das Mobiltelefon. Damit werden die systemimmanenten Kosten (Produktion und logistische Vorhaltung der Smartcards) weiter gesenkt. Zugleich wird die Akzeptanz von elektronischen Ticket-Systemen erhöht, da das Mobiltelefon inzwischen zur Grundausstattung eines nahezu jeden Reisenden zählt. Dieser Ansatz wird dadurch gestärkt, dass inzwischen entsprechende Standards für die Kommunikation über Nah- bzw. Kurzstreckenfunkschnittstellen verfügbar sind (RFID, NFC). So sieht beispielsweise der Standard für NFC Übertragungsraten von bis zu 424 Kilobit pro Sekunde auf der Frequenz von 13.56 MHz vor. Da das beim elektronischen Ticketing auszutauschende Datenvolumen eher gering ist (es sind im Wesentlichen nur An- bzw. Abmelde-Datensätze oder Öffnungs- bzw. Sperr-Codes zu übertragen), stellt dieser Standard eine robuste Ausgangsbasis dar.

Aus der DE 101 37 579 ist ein Verfahren zum Übertragen eines Öffnungscodes für ein Codeschloss bekannt. Hierbei ist vorgesehen, dass ein Transportmittel (z.B. ein Miet-Fahrrad) mit einem Codeschloss versehen ist, das in Abhängigkeit von einem Öffnungscode geöffnet werden kann. Ein interessierter Nutzer des Transportmittels kann über sein Mobilfunk-Endgerät und das Mobilfunknetz eine Verbindung zu einem Diensterbringungsrechner aufbauen, wo eine Authentifizierung des Nutzers stattfindet und nach erfolgreicher Authentifizierung ein Öffnungscode für dieses Codeschloss ermittelt wird. Dieser Öffnungscode wird über das Mobilfunknetz zum Mobilfunk-Endgerät des Nutzers zurück übertragen und kann von dort über eine lokale Schnittstelle an das Codeschloss übertragen werden. Die DE 10 2006 019 628 A1 schlägt für diese lokale Schnittstelle die Verwendung der NFC-Technologie vor. Die WO 2002/051676 A1 schlägt hierfür eine im GHz-Bereich arbeitende bidirektionale Nah-Kommunikationsschnittstelle vor, wie sie auch für den Telefonverkehr bestimmt ist.

Bei der Anwendung dieses Standes der Technik im Kontext des Entleihens von Transportmitteln - so offenbart die DE 101 37 579 A1 beispielsweise die Anwendung im Rahmen eines Fahrrad-Vermietsystems - besteht ein gewisses Problem darin, dass das Codeschloss einer elektrischen Energieversorgung für die Datenkommunikation mit dem Nutzer und das Durchführen der Ent- bzw. Verriegelungsvorgänge bedarf.

Da die Mietfahrräder auch an Orten ohne stationäre Energieversorgungsanlagen abgestellt bzw. vorgehalten werden sollen, müssen derartige Codeschlösser über einen längeren Zeitraum energieautark bzw. batteriegepuffert ausgeführt sein. Eine geringe Stromaufnahme hat somit höchste Priorität. Die Elektronik befindet sich deshalb im Normalfall in einem verbrauchsarmen bzw. verbrauchsfreien Stand-by-Modus. Bei den bisher bekannten Anwendungen wird das Codeschloss durch den Nutzer mittels einer manuellen Bedienhandlung aufgeweckt, z.B. durch das Drücken einer Taste oder das Berühren eines Displays. Das Codeschloss muss hierfür aber über entsprechende mechanische Bedienelemente bzw. Touch-Screens verfügen, die zum Schutz vor unbeabsichtigter Bedienung oder gar Beschädigung mit einer Schutzkappe oder ähnlichem abgedeckt sein müssen und die Kosten eines solchen Codeschlosses erhöhen.

Aus der US 6,535,136 B1 ist eine Zugangskontrolleinrichtung mit einem ersten Lesegerät bekannt, das die Öffnungs- und Verriegelungsinformationen von einer im Nahfeldbereich des Lesegerätes befindlichen Codekarte erhält. Zur Reduzierung des Strombedarfs ist die Zugangskontrolleinrichtung mit einer Aufweckschaltung nebst einem zweiten Detektionsgerät zur Erfassung der Anwesenheit der Codekarte versehen, welches bei Annäherung einer Codekarte durch Schließen eines Schalters die Stromversorgung des ersten Lesegerätes aktiviert. Eventuelle Fehlauslösungen des zweiten Detektionsgerätes verursachen jedoch einen Stromverbrauch durch ein aktiviertes erstes Lesegerät, so dass diese Zugangskontrolleinrichtung um zusätzliche Sicherheitsmaßnahmen gegen ein unbeabsichtigtes Auslösen des zweiten Detektionsgerätes ergänzt werden muss.

In der KR 10 0 769 540 B1 (Abstract) ist ein NFC-Schaltkreis mit einem RFID-Transponder und einem Transceiver beschrieben, welche an eine Dual-Loop-Antenne angeschlossen sind. Zum Umschalten zwischen den beiden Betriebsmodi werden die Spulen der Antenne auf Masse gelegt.

Der Erfindung liegt die Aufgabe zugrunde, eine Vorrichtung zum Aktivieren und Deaktivieren einer Zugangskontrolleinrichtung, welche zum Empfang eines von einem mobilen Kommunikationsendgerät ausgesendeten elektronischen Öffnungs- und Verriegelungscodes über eine Nah- oder Kurzstreckenfunkschnittstelle ausgelegt ist, bereitzustellen, welche gegenüber dem bekannten Stand der Technik kostengünstiger, robuster und weniger störanfällig ausgeführt ist. Unter einer solchen Zugangskontrolleinrichtung versteht der Fachmann nicht nur die bereits weiter oben erwähnten Codeschlösser, welche dem Sichern von Gegenständen gegen unerlaubtes Entfernen bzw. Benützen dienen, sondern auch Einrichtungen, die den Zutritt zu meist kostenpflichtigen oder anderweitig zugangsbeschränkten Veranstaltungen oder Räumen regeln (z.B. Personensperren an Zugänge zu Veranstaitungsorten oder Verkehrsmitteln).

Diese Aufgabe wird in Verbindung mit dem Oberbegriff des Patentanspruches 1 erfindungsgemäß dadurch gelöst, dass die Vorrichtung einen Schaltkreis umfasst, der aus einem Transponder-IC, einem Transceiver-IC sowie aus einem eine Spule und einen Kondensator umfassenden Schwingkreis aufgebaut und zum Empfangen und Senden über eine Nahfunkschnittstelle nach ISO/IEC 18092 ausgelegt ist, wobei der Transponder-IC und der Transceiver-IC über einen Schalter wechselweise mit dem Schwingkreis verbindbar sind und der Schalter über einen Halbleiter-Schalter an den Transponder-IC angeschlossen ist.

Mit einer solchen Vorrichtung kann in besonders einfacher Weise die Energie eines von einem mobilen Kommunikationsendgerät ausgesandten elektromagnetischen Feldes für das Umschalten des NFC-Schaltkreises von einem Transponder-Modus in einen Transceiver-Modus genutzt werden und damit eine erfindungsgemäß ausgeführte Zugangskontrolleinrichtung von einem energiesparenden Stand-by-Modus bzw. "Card Emulation Mode" in einen aktiven Modus ("Peer to Peer - Mode") genutzt werden.

Es wäre zwar denkbar, den Halbleiter-Schalter direkt über das vom mobilen Kommunikationsendgerät ausgesandte elektromagnetische Feld zu schalten. Allerdings beinhaltet dies die Gefahr von Fehlfunktionen, da jedes inhaltsleere elektromagnetische Feld eine Betätigung des Schalters hervorrufen würde. Die Erfindung sieht also in vorteilhafter Weise vor, dass zusätzlich zur Existenz eines geeigneten elektromagnetischen Feldes eine dekodierbare Signalisierung vorhanden sein muss. Eine erfindungsgemäße Vorrichtung ist also vor Manipulationen bzw. Fehlfunktionen durch bewusstes oder unbewusstes Störsenden auf die Zugangskontrollvorrichtung geschützt.

Der Transponder-IC im Sinne der vorliegenden Erfindung ist als passiver Transponder, d.h. ohne Eigenenergie-Versorgung, ausgeführt. Der Transceiver-IC im Sinne der vorliegenden Erfindung verfügt über eine Eigenenergie-Versorgung, z.B. aus einer Batterie.

Die mobile Kommunikationseinrichtung kann z.B. über ein NFC-Modul verfügen und einem Nutzer zugeordnet sein, der einen mit einer erfindungsgemäß ausgerüsteten Zugangskontrolleinrichtung (hier: Codeschloss) versehenen Gegenstand ausleihen möchte. Nach Aktivieren des NFC-Moduls seines Mobiltelefons nähert der Nutzer dieses der Zugangskontrolleinrichtung. Bei hinreichender Annäherung ist die Energiedichte des NFC-Feldes ausreichend groß, um über die Spule des RFID-Transponders in der Zugangskontrolleinrichtung einen Stromimpuls zu generieren. Zudem ist diese benötigte Energie gering, da nur ein integrierter Schaltkreis (hier: der Transponder-IC) mit Energie versorgt werden muss. Der Akku des Mobiltelefons des Nutzers wird dadurch also auch nur wenig belastet.

Wenn in einer konkreten Ausgestaltung noch die Übertragung von Daten vom Codeschloss zurück an das Mobiltelefon vorgesehen ist, so erfolgt dies durch Lastmodulation des Schwingkreises. Somit wird auch für diesen Schritt keine separate Energieversorgung notwendig.

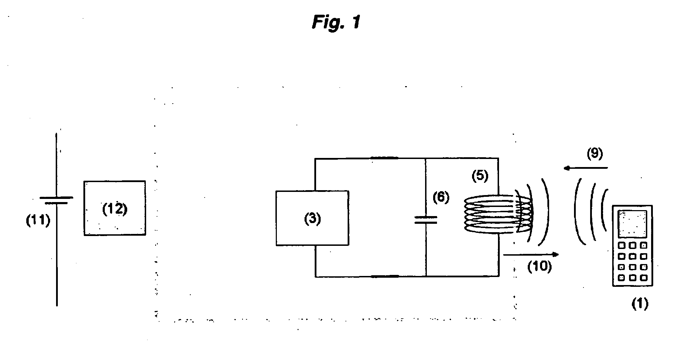

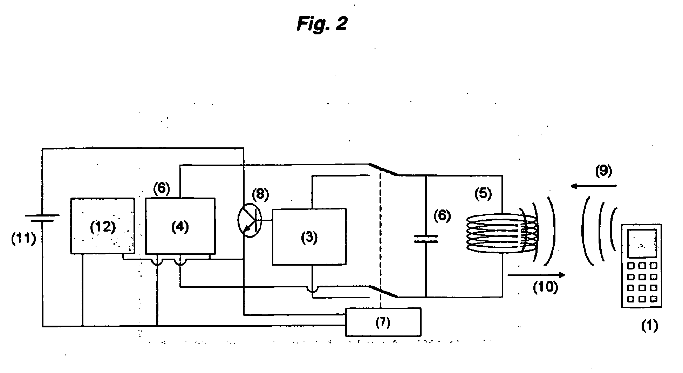

Der Erfindungsgedanke wird in nachfolgendem Ausführungsbeispiel anhand der Figuren 1 und 2 erläutert. Es zeigen:
- Figur 1:: Vorrichtung mit einem im Transponder-Modus bzw. "Card Emulation - Mode" geschalteten NFC-Schaltkreis
- Figur 2:: Vorrichtung mit einem im Transceiver-Modus bzw. "Peer to Peer - Mode" geschalteten NFC-Schaltkreis

Die in den Figuren 1 und 2 dargestellte Vorrichtung ist im Codeschloss eines Mietfahrrades eingebaut, welches vom Kunden bzw. Nutzer mittels eines tragbaren Mobiltelefones (1) mit einer Nahfunkschnittstelle nach ISO/IEC 18092 geöffnet bzw. verriegelt werden kann. Ein solches Mobiltelefon wird im Folgenden als NFC-Mobile bezeichnet (wobei NFC = Near Field Communication).

Ein solches NFC-Mobile dient dem Nutzer als Kundenmedium zur Erfassung und damit letztlich auch zur Abrechnung der in Anspruch genommenen Miet-Dienstleistung. Auf der SIM-Karte des NFC-Mobiles befindet sich eine authentische Chipkartenapplikation zur Durchführung des Mietvorgangs, der wie folgt abläuft:

Das Codeschloss des Miet-Fahrrades verfügt über einen als embedded system ausgeführten NFC-Schaltkreis (2). Wenn das Miet-Fahrrad nicht unmittelbar zuvor von einem anderen Kunden genutzt worden war, so befindet sich dieser NFC-Schaltkreis in einem "Card Emulation"-Modus bzw. "Passive Communication"-Modus, d.h. der aus Spule (5) und Kondensator (6) bestehende Schwingkreis ist durch eine entsprechende Stellung des Schalters (7) mit dem passiven Transponder-IC (3) verbunden. In Figur 1 ist dieser Zustand dargestellt. Der integrierte NFC-Schaltkreis verhält sich in diesem Zustand wie ein passiver Transponder, d.h. er ist von der restlichen Elektronik des Codeschlosses und insbesondere von dessen Energieversorgung abgekoppelt und verbraucht somit auch keine Energie.

Ein Nutzer, der dieses Miet-Fahrrad nun entleihen möchte, aktiviert an seinem NFC-Mobile den NFC-Funk und führt das Mobile auf einen Abstand von unter 6 cm an das Codeschloss eines abgestellten Miet-Fahrrades heran. Beim Annähern des NFC-Mobiles zieht der integrierte Schaltkreis (2) seine benötigte Energie aus dem vom Mobile abgestrahlten elektromagnetischen NFC-Feld (9). Die benötigte Energie ist klein, da nur ein integrierter Schaltkreis mit Energie versorgt werden muss, so dass der Akku des NFC-Mobiles nur unwesentlich belastet wird. Mit dem elektromagnetischen Feld können auch Daten an das Codeschloss übertragen werden. Die Übertragung von Daten vom Schloss zurück zum Mobile erfolgt durch Lastmodulation des Schwingkreises, also ohne den Aufwand von elektrischer Energie des Schlosses, so dass auch für diesen Schritt noch keine separate Energie benötigt wird. In der hier beschriebenen beispielhaften Anwendung wird ein Befehl vom Code-Schloss zum Mobile übertragen, der das Mobile zum Starten einer auf der SIM-Karte gespeicherten Applikation veranlasst. Diese Applikation kann z.B. einen an das Code-Schloss gerichteten Befehl zum Wechsel in den "Active Communication Mode" sowie Auslesen und Übermitteln der Gerätenummer des Mietgegenstandes auslösen.

Sobald der in der erfindungsgemäßen Vorrichtung integrierte Transponder-IC von der Applikation auf dem NFC-Mobile den Befehl zum Wechsel in den "Peer to Peer - Mode" bzw. "Active Communication Mode" erhält, aktiviert er über einen Halbleiter-Schalter (siehe Figur 2) eine Umstellvorgang des Schalters (7), wodurch der Schwingkreis auf den Transceiver-IC (4) umgeschaltet wird. Nunmehr ist die erfindungsgemäße Vorrichtung auch mit der Energieversorgung (11) des Code-Schlosses verbunden und kann ein eigenes elektromagnetisches Feld (10) aufbauen.

Nach diesem Aufwecken bzw. Aktivierungs-Vorgang läuft das weitere Verfahren der Fahrrad-Entleihe nach dem (z.B. aus der DE 101 37 579) bekannten Schema ab:
■ dem Nutzer wird die Identität des Miet-Fahrrades angezeigt (bzw. für den Fall, dass das Miet-Fahrrad bereits anderweitige vermietet und nicht verfügbar ist: Anzeige einer entsprechenden Negativ-Meldung);
■ der Nutzer bestätigt seinen Miet-Wunsch, wodurch der über das Mobilfunksystem erfolgende Datenaustausch mit dem Hintergrundsystem des Verleihers gestartet wird (Registrierung der abrechnungsrelevanten Daten, Erzeugung und Übergabe des Öffnungscodes zum Öffnen des Code-Schlosses an den Nutzer);
■ Übertragung des Öffnungscodes mittels NFC-Kommunikation an das Code-Schloss;
■ automatisches Öffnen des Mietgegenstandes und Zurückschalten des NFC-Schaltkreises vom Transceiver- in den Transpondermodus;
■ bei der Rückgabe des Mietgegenstandes wird das geöffnete Code-Schloss vom Nutzer wieder manuell verschlossen. Durch dieses Verschließen (das z.B. mittels eines elektrischen Stromkreises detektiert werden kann) wird ein erneutes Umschalten vom Transponder- in den Transceiver-Modus getriggert. Auch bei einer Beendigung des Mietverhältnisses ist eine Kommunikationsverbindung zwischen dem Nutzer und dem Mietgegenstand erforderlich (und der Nutzer muss zu diesem Zweck sein Mobile an das Code-Schloss annähern).

### Bezugszeichenliste:

- 1: Mobilfunk-Gerät mit NFC-Schnittstelle
- 2: in das Codeschloss eingebetteter ("embedded") NFC-Schaltkreis
- 3: Transponder-IC (IC = "integrated circuit" bzw. Integrierter Schaltkreis)
- 4: Transceiver-IC
- 5: Spule des Schwingkreises
- 6: Kondensator des Schwingkreises
- 7: Schalter
- 8: Halbleiter-Schalter
- 9: vom Mobilfunk-Gerät an den NFC-Schaltkreis übertragene Funkwellen
- 10: vom NFC-Schaltkreis an das Mobilfunkgerät übertragene Funkwellen
- 11: Stromversorgung (Batterie)
- 12: übrige Steuerung

## Patentansprüche

1. Vorrichtung zum Aktivieren und Deaktivieren einer Zugangskontrolleinrichtung, welche zum Empfang eines von einem mobilen Kommunikationsendgerät (1) ausgesendeten elektronischen Öffnungs- und Verriegelungscodes über eine Nah- oder Kurzstreckenfunkschnittstelle ausgelegt ist,
**dadurch gekennzeichnet,**
**dass** die Vorrichtung einen Schaltkreis (2) umfasst, der aus einem Transponder-IC (3), einem Transceiver-IC (4) sowie aus einem eine Spule (5) und einen Kondensator (6) umfassenden Schwingkreis aufgebaut und zum Empfangen und Senden über eine Nahfunkschnittstelle nach ISO/IEC 18092 ausgelegt ist,
wobei der Transponder-IC (3) und der Transceiver-IC (4) über einen Schalter (7) wechselweise mit dem Schwingkreis verbindbar sind und der Schalter (7) über einen Halbleiter-Schalter (8) an den Transponder-IC (3) angeschlossen ist.

## Claims

1. A device for activating and deactivating an access control device which is designed for receiving an electronic opening and locking code sent out by a mobile communication terminal device (1) via a short range radio interface,
**characterized in that**
the device comprises a circuit (2)which is constructed of a transponder-IC (3), a transceiver-IC (4) and a resonant circuit comprising a coil (5) and a capacitor (6) and designed for receiving and sending via a short range radio interface according to ISO/IEC 18092, wherein the transponder-IC (3), and the transceiver-IC (4)can be alternately connected with the resonant circuit via a switch (7) and the switch (7) is connected to the transponder-IC (3) via a semiconductor switch (8).

## Revendications

1. Dispositif d'activation et de désactivation d'un système de contrôle d'accès, qui est conçu pour recevoir un code d'ouverture et de verrouillage électronique émis par un appareil terminal de communication mobile (1) via une interface radio de proximité ou de courte distance,
**caractérisé en ce que**
le dispositif comprend un circuit (2) qui est composé d'un CI transpondeur (3), d'un CI émetteur-récepteur (4) et d'un circuit oscillateur comportant une bobine (5) et un condensateur (6) et est conçu pour recevoir et émettre via une interface radio de proximité suivant l'ISO/IEC 18092,
le CI transpondeur (3) et le CI émetteur-récepteur (4) pouvant être reliés facultativement via un commutateur (7) au circuit oscillateur et le commutateur (7) étant raccordé par un commutateur à semi-conducteurs (8) au CI transpondeur (3).
